# EUROPÄISCHE PATENTANMELDUNG

(11) **EP 1 387 497 A1**
(43) Veröffentlichungstag der Anmeldung: **04.02.2004**
(21) Anmeldenummer: 02017397.7
(22) Anmeldetag: 02.08.2002
(51) Int. Cl.: H04B 1/38, H01Q 1/24

(54) **Mobiltelefon mit integrierter zusätzlicher Antenne**

(71) Anmelder: SIEMENS AKTIENGESELLSCHAFT, 80333 München (DE)
(72) Erfinder: Larkamp, Markus, 47800 Krefeld (DE); Schrage, Ortwin, 47906 Kempten (DE)

(57) **Zusammenfassung**

Bei einem Mobiltelefon mit einer ersten Antenne für einen Mobilfunkfrequenzbereich eines Mobilfunk-Netzwerks, einer zweiten Antenne (5) für einen zusätzlichen Frequenzbereich und einer Hörkapsel (2), der ein von Material freies Volumen zugeordnet ist, wird die Aufgabe, die zweite Antenne platzsparend, jedoch mit ausreichend großem zugehörigen Volumen unterzubringen, dadurch gelöst, dass die zweite Antenne (5) in der Hörkapsel (2) zugeordneten freien Volumen angeordnet ist.

## Beschreibung

Die Erfindung bezieht sich auf ein Mobiltelefon mit einer ersten Antenne für einen Mobilfunkfrequenzbereich eines Mobilfunk-Netzwerks, einer zweiten Antenne für einen zusätzlichen Frequenzbereich und einer Hörkapsel, der ein von Material freies Volumen zugeordnet ist.

Bei einem solchen, bekannten Mobiltelefon ist die erste Antenne für eine übliche Kommunikationsverbindung beispielsweise zu einer Basisstation eines Mobilfunk-Netzwerks vorgesehen. Die zweite Antenne kann beispielsweise eine Bluetooth-Antenne sein, die in dem Frequenzbereich von etwa 2.400 bis 2.480 MHz arbeitet.

Bei der Unterbringung der zusätzlichen, zweiten Antenne ist zu beachten, dass bei Mobiltelefonen die Abmessungen für Antennen aus Gründen des Designs eingeschränkt sind. Dies gilt in besonders hohem Masse für in das Mobiltelefon integrierte Antennen.

Bei der Weiterentwicklung von Mobiltelefonen wird es als wünschenswert angesehen, dass sie nicht nur beispielsweise in GSM-Mobilfunknetzen senden und empfangen können, sondern auch in zusätzlichen Frequenzbereichen, wie dem Bluetooth-Frequenzbereich bei etwa 2,45 GHz. Für solche Anwendungen wird die zweite Antenne benötigt, die in dem gewünschten zusätzlichen Frequenzband eine ausreichende Leistungsfähigkeit besitzt.

Für die zweite Antenne ist ein zugehöriges Antennenvolumen vorzusehen, wobei bisher bekannt ist, dass ein der ersten Antenne für den Mobilfunkfrequenzbereich zugeordnetes Volumen wenigstens teilweise auch für die zweite Antenne genutzt werden kann. Alternativ wird für beispielsweise eine Bluetooth-Antenne, die in das Mobiltelefon integriert ist, ein gesondertes Volumen vorgesehen.

Des weiteren ist in Zusammenhang mit der Integration der zweiten Antenne in das Mobiltelefon das Problem zu lösen, eine elektrische Anbindung an eine gedruckte Schaltkreisplatine des Mobiltelefons zu verwirklichen und auch eine mechanische Fixierung der zweiten Antenne zu bewerkstelligen.

Das oben genannte Mobiltelefon ist neben der ersten und der zweiten Antenne auch standardmäßig mit einer Hörkapsel ausgestattet, mit der Schallsignale zur Wahrnehmung durch den Benutzer des Mobiltelefons ausgestrahlt werden. Dieser Hörkapsel ist für eine ausreichende Klangqualität ein von Material freies Volumen zugeordnet.

Ausgehend hiervon liegt der Erfindung die Aufgabe zugrunde, ein Mobiltelefon zu schaffen, bei dem die zweite Antenne platzsparend, jedoch mit ausreichend großem zugehörigen Volumen untergebracht ist.

Diese Aufgabe wird bei dem eingangs genannten Mobiltelefon dadurch gelöst, dass die zweite Antenne in dem der Hörkapsel zugeordneten freien Volumen angeordnet ist.

Insofern findet eine Doppelnutzung des der Hörkapsel zugeordneten freien Volumens, das auch "Hörkapsel-Vorkammervolumen" genannt wird, statt. Dieser Bereich des Mobiltelefons hat üblicher Weise die Eigenschaft, dass sich bei gängigen Mobiltelefon-Ausführungsformen wenig metallische Bauteile in direkter Umgebung befinden, wobei auch das Volumen von seiner Größe her insbesondere zur Unterbringung von Bluetooth-Antennen geeignet ist.

Bevorzugt ist das freie Volumen, in dem die zweite Antenne untergebracht ist, im wesentlichen zwischen der Hörkapsel und einem Abschnitt einer gedruckten Schaltkreisplatine des Mobiltelefons definiert. Dies hat den Vorteil, dass für erforderliche elektrische Kontaktierungen und mechanische Befestigungen der zweiten Antenne lediglich geringe Abstände zu überwinden sind. Dies ermöglicht geringe Hochfrequenzverluste für beispielsweise eine Bluetooth-Antenne und eine sichere mechanische Befestigung an der gedruckten Schaltkreisplatine.

Die Hörkapsel und die zweite Antenne können zu einem Einbaumodul zusammengefasst sein, wobei dann das Einbaumodul auf der Schaltkreisplatine kontaktiert sein kann. Das Einbaumodul kann mechanisch an der Schaltkreisplatine oder anderen, ausreichende Stabilität bietenden Bauteilen des Mobiltelefons befestigt werden, wobei insbesondere eine Aufrastbefestigung gewählt werden kann. Die Kontaktierung der zweiten Antenne kann mittels einer Lötverbindung oder einer Druckkontaktierung an eine Elektronik für die zweite Antenne erfolgen. Diese Kontaktierungsalternativen gelten sowohl für die Ausführungsform als Einbaumodul als auch für die Ausführungsform mit einer einzelnen zweiten Antenne.

Es ist auch möglich, die zweite Antenne mechanisch an der Hörkapsel zu befestigen, soweit Voraussetzungen für eine solche mechanische Befestigung an der zweiten Antenne und der Hörkapsel geschaffen sind. Hier kann das Verrasten der zweiten Antenne mit der Hörkapsel vorteilhaft sein.

Alternativ zu der Ausführungsform als Einbaumodul, das sowohl die Hörkapsel als auch die zweite Antenne enthält, können die Hörkapsel und die zweite Antenne jeweils einzeln in dem von Material freien Volumen untergebracht sein.

Bei einem bevorzugten Ausführungsbeispiel ist die zweite Antenne als Bluetooth-Antenne ausgebildet, wobei das freie Volumen wenigstens 0,7 cm³ beträgt. Bei gängigen Mobiltelefonen beträgt das Hörkapselvorkammervolumen typischer Weise 1 cm³, so dass ein zufriedenstellender Betrieb der Bluetooth-Antenne als zweite Antenne zu erwarten ist.

Für die beabsichtigte Mehrfachnutzung des der Hörkapsel zugeordneten, von Material freien Volumens werden keine negativen Effekte, wie beispielsweise Brummen erwartet, da die typische Leistung von Bluetooth-Schaltungen in Mobiltelefonen bei etwa nur 0 dBm liegen.

Gegenüber den oben erwähnten bekannten Lösungen, bei denen die zweite Antenne wenigstens einen Teil des Volumens der ersten Antenne nutzt, ist folgender Vorteil besonders hervorzuheben: Die bekannten Lösungen erfordern eine ausreichende Koppeldämpfung zwischen der ersten Antenne für den Mobilfunkfrequenzbereich und der zweiten Antenne, was zusätzliche und aufwendige Entkopplungsfilter erfordert. Wenn gemäß der Erfindung beispielsweise eine Bluetooth-Antenne in dem der Hörkapsel zugeordneten freien Volumen untergebracht ist, befindet sich die erste Antenne für den Mobilfunkfrequenzbereich entfernt von der Bluetooth-Antenne, so dass die Entkopplungsfilter wenigstens teilweise eingespart werden können.

Ausführungsbeispiele der Erfindung werden nachfolgend anhand der Zeichnungen noch näher erläutert. Es zeigen:
- Figur 1: eine schematische Ansicht eines Teils einer Vorderseite eines Mobiltelefons, wobei ein Bereich einer Hörkapsel freigeschnitten ist und
- Figur 2: eine grafische Darstellung eines Reflektionskoeffizienten S₁₁ einer Bluetooth-Antenne, die in einem Vorkammervolumen einer Hörkapsel eines Mobiltelefons untergebracht ist.

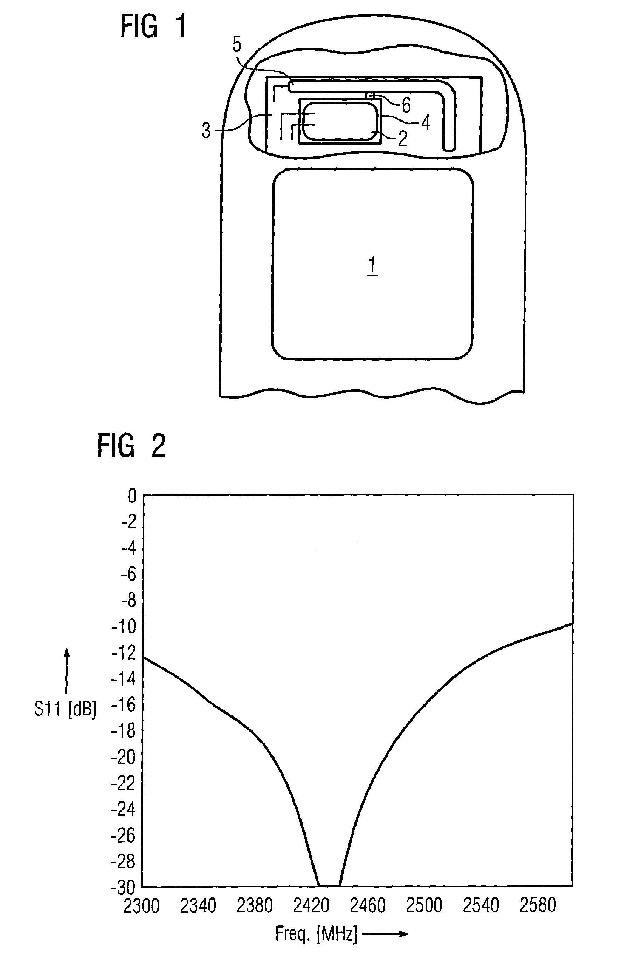

Wie aus Figur 1 hervorgeht, befindet sich bei einem Mobiltelefon oberhalb eines Anzeigefeldes 1 eine Hörkapsel 2. Die Hörkapsel 2 ist an einer in bezug auf die Vorderseite des Mobiltelefons unter der Hörkapsel 2 angeordneten Schaltkreisplatine 3 kontaktiert.

Die Hörkapsel 2 ist von einem Gehäuse 4 aus Kunststoffmaterial umgeben.

Die Hörkapsel 2 befindet sich in einem Abstand zu der gedruckten Schaltkreisplatine 3, so dass sich zwischen der Hörkapsel 2 und einem Abschnitt der gedruckten Schaltkreisplatine 3 ein von Material freies Volumen ergibt.

In dem von Material freien Volumen ist eine Bluetooth-Antenne 5 untergebracht, die ebenfalls an der gedruckten Schaltkreisplatine 3 kontaktiert ist. Die Bluetooth-Antenne 5 kann als zweite Antenne des Mobiltelefons angesehen werden, wobei das Mobiltelefon, wie im Stand der Technik üblich, mit einer ersten Antenne ausgerüstet ist, deren Funktion darin besteht, Kommunikationsverbindungen zu Basisstationen eines Mobilfunknetzes zu ermöglichen.

Die Bluetooth-Antenne 5 im dargestellten Ausführungsbeispiel ist mittels einer Lötverbindung an der gedruckten Schaltkreisplatine 3 kontaktiert. Alternativ ist es auch möglich, für die Bluetooth-Antenne 5 eine Druckkontaktierung vorzusehen. Eine der Bluetooth-Antenne 5 zugehörige Bluetooth-Elektronik ist auf der gedruckten Schaltkreisplatine 3 untergebracht, und zwar möglichst in der Nähe der Bluetooth-Antenne 5, um Hochfrequenzverluste zu vermeiden.

Bei einem anderen Ausführungsbeispiel kann die Bluetooth-Antenne 5 einen gesonderten Masseanschluss aufweisen, der an einer Staubdichtung des Anzeigefeldes 1 kontaktiert ist, die mit einer Kupfer-Folie ausgestattet ist.

Zur mechanischen Halterung der Bluetooth-Antenne 5 dient im dargestellten Ausführungsbeispiel eine Rastverbindung 6 zwischen der Bluetooth-Antenne 5 und dem Gehäuse 4 der Hörkapsel 2. Selbstverständlich kann die Bluetooth-Antenne 5 in anderen Ausführungsbeispielen auch gesondert gehalten werden. Auch ist die Unterbringung der Bluetooth-Antenne 5 gemeinsam mit der Hörkapsel 2 in einem gemeinsamen Gehäuse zur Bildung eines Einbaumoduls möglich. In diesem Fall entfällt das in Figur 1 dargestellte Gehäuse 4 der Hörkapsel 2.

Es ist hervorzuheben, dass die gedruckte Schaltkreisplatine 3 nicht notwendigerweise bis unter die Hörkapsel 2 und die Bluetooth-Antenne 5 reichen muss. Erfindungswesentlich ist in erster Linie, dass das von Material freie Volumen, das als Vorkammervolumen der Hörkapsel 2 bezeichnet werden kann, dazu benutzt wird, die Bluetooth-Antenne 5 unterzubringen.

Die außerdem bei dem Mobiltelefon vorhandene erste Antenne für einen Mobilfunkbetrieb, die in Figur 1 nicht dargestellt ist, kann unterhalb des Anzeigefeldes 1 auf der anderen Seite der Schaltkreisplatine 3 angeordnet sein, so dass sich ein erheblicher räumlicher Abstand zwischen der Bluetooth-Antenne 5 und der ersten Antenne ergibt. Auf diese Weise erfolgt eine zufriedenstellende elektromagnetische Entkopplung der ersten und der zweiten Antenne voneinander.

Das von Material freie Volumen, das der Hörkapsel 2 zugeordnet ist und auch von der Bluetooth-Antenne 5 genutzt wird, beträgt mindestens 0,7 cm³, im vorliegendem Ausführungsbeispiel etwa 1 cm³.

Unter diesen Randbedingungen wurden für die Bluetooth-Antenne 5 Messungen des Reflektionskoeffizienten S₁₁ über einen Frequenzbereich durchgeführt, der den Bluetooth-Frequenzbereich bei 2,45 GHz einschließt. Der sich ergebende Verlauf des Reflektionskoeffizienten S₁₁ ergibt sich aus der Figur 2 und zeigt insbesondere, dass im Bereich der Bluetooth-Frequenzen der Reflektionskoeffizient S₁₁ ein Minimum an geeigneter Stelle aufweist.

Es ist darauf hinzuweisen, dass das Mobiltelefon im Bereich um das vom Material freie Volumen, dass der Hörkapsel 2 zugeordnet ist, herum im wesentlichen von metallischen Bauelementen frei ist. Als Maß dafür kann der Aufbau des Mobiltelefons S45 der Fa. Siemens® im Bereich oberhalb des Anzeigefeldes 1 gelten.

## Patentansprüche

1. Mobiltelefon mit einer ersten Antenne für einen Mobilfunkfrequenzbereich eines Mobilfunk-Netzwerks, einer zweiten Antenne (5) für einen zusätzlichen Frequenzbereich und einer Hörkapsel (2), der ein von Material freies Volumen zugeordnet ist,
**dadurch gekennzeichnet, dass**
die zweite Antenne (5) in dem der Hörkapsel (2) zugeordneten freien Volumen angeordnet ist.

2. Mobiltelefon nach Anspruch 1,
**dadurch gekennzeichnet, dass**
das freie Volumen im wesentlichen zwischen der Hörkapsel (2) und einem Abschnitt einer gedruckten Schaltkreisplatine (3) des Mobiltelefons definiert ist.

3. Mobiltelefon nach einem der Ansprüche 1 oder 2,
**dadurch gekennzeichnet, dass**
die Hörkapsel (2) und die zweite Antenne (5) zu einem Einbaumodul zusammengefasst sind und das Einbaumodul auf der Schaltkreisplatine (3) kontaktiert ist.

4. Mobiltelefon nach einem der Ansprüche 1 oder 2,
**dadurch gekennzeichnet, dass**
die Hörkapsel (2) und die zweite Antenne (5) jeweils einzeln untergebracht sind.

5. Mobiltelefon nach Anspruch 4,
**dadurch gekennzeichnet, dass**
die zweite Antenne (5) mittels einer Lötverbindung oder einer Druckkontaktierung an eine Elektronik für die zweite Antenne (5) angeschlossen ist.

6. Vorrichtung nach einem der Ansprüche 1 bis 5,
**dadurch gekennzeichnet, dass**
die zweite Antenne (5) als Bluetooth-Antenne ausgebildet ist und das freie Volumen wenigstens 0,7 cm³ beträgt.
